Europäisches Patentamt

European Patent Office

Office européen des brevets

(11) Publication number: **0 262 273**
**A1**

## EUROPEAN PATENT APPLICATION

(21) Application number: **86310042.6**

(22) Date of filing: **22.12.86**

(51) Int. Cl.4: **H05B 3/82** , F24H 1/20 ,
A47J 31/54

(30) Priority: **04.09.86 GB 8621318**

(43) Date of publication of application:
**06.04.88 Bulletin 88/14**

(84) Designated Contracting States:
**DE FR NL SE**

(71) Applicant: **W.M. STILL & SONS LIMITED**
**Fellows Road Hastings**
**East Sussex, TN34 3TX(GB)**

(72) Inventor: **Hayes, Cecil**
**17 Ashford Way**
**Hastings East Sussex(GB)**
Inventor: **Snowball, Malcolm Robert**
**8 Regency Gardens**
**St. Leonards-on-Sea East Sussex(GB)**

(74) Representative: **Allen, Oliver John Richard et
al**
**Lloyd Wise, Tregear & Co. Norman House
105-109 Strand
London, WC2R 0AE(GB)**

(54) Electric water heating element.

(57) An apparatus for heating and dispensing liquid
having an electric heating element (1) formed as a
spiral whereby continual expansion and contraction
thereof causes scale thereon to "crack off", the
element being supported by and positioned in the
apparatus such that the area underneath the element
is substantially free of obstruction in order that scale
can crack off and fall freely a distance as to prevent
build-up of scale around the element.

EP 0 262 273 A1

This invention relates to electric heating elements for liquids.

Electric heating elements employed in, for example kettles, water boilers or coffee making apparatus have to be cleaned at regular intervals to remove scale which builds up on the surface of the element especially in "hard water" areas and which restricts the efficiency of the element.

The general object of this invention is to provide an element on which scale does not build up on the element as fast as hitherto.

In accordance with the present invention, an apparatus for heating and dispensing liquid has an electric heating element formed as a spiral with at least two coils for heating liquid to boiling point, the heating element supported by and positioned in the apparatus whereby the area underneath the coils is substantially free of obstruction so that scale can crack off the coils and fall freely such a distance as to prevent build-up of scale around the lowermost portions of the coils, and means for dispensing the heated liquid from the apparatus.

It has been found that scale tends to break away from a water heating element at the point of maximum curvature and thus by forming the element in the form of a spiral, as compared with the conventional modified "mushroom" shape, the area of the strip which is curved is much higher than has been used hitherto. When carrying current the spiral strip will expand in all directions, and when not carrying current the spiral strip will contract. This continual expansion and contraction (or in the case of a spirally wound element, this winding and un-winding) will tend to 'crack off' scale from the curved surface.

The lowermost portions of the coils are suitably positioned a distance from any obstruction corresponding to at least the radius of the coils (and more preferably at least three times the radius of the coils).

Normally the spiral shape will employ a longer length of strip which will be of somewhat smaller cross sectional area (e.g. between 40 and 60 mm², and suitably 50 mm²) than that of a conventional heating element.

The coils suitably have a linear expansion coefficient between 17 and $22 \times 10^{-6} K^{-1}$, and more preferably between 18.5 and $20.5 \times 10^{-6} K^{-1}$.

The invention will now be further described by way of example with reference to the accompanying drawings in which:-

Figure 1 is a plan view of an electric heating element for liquids in accordance with the invention,

Figure 2 is an end elevation of the element shown in Figure 1,

Figure 3 is a schematic side elevation of a hot water dispenser incorporating a heating element in accordance with the invention,

Figure 4 is an enlarged plan view of the heater portion of the dispenser shown in Figure 3,

Figure 5 is a side view of the heater portion of Figure 4,

Figure 6 is a schematic side elevation of a coffee making apparatus incorporating a heating element in accordance with the invention,

Figure 7 is an enlarged front view of the heater portion of the apparatus shown in Figure 6, and

Figure 8 is a plan view of the heater portion of Figure 7.

As can be seen from the drawings the element 1 comprises a strip 2 formed into a spiral having about three coils. The two free ends 4 and 6 are brazed to standard bushes for connection to standard electric connections of a water heating boiler or the like.

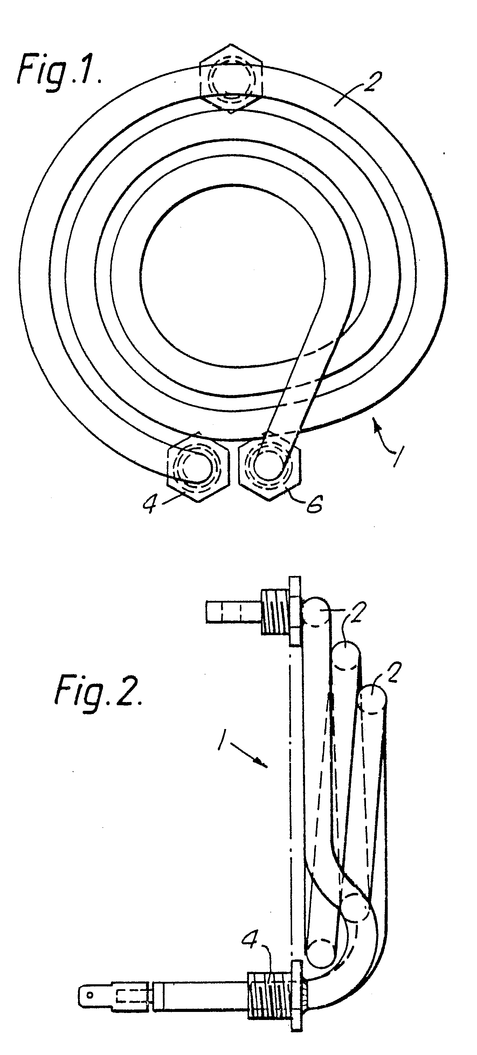

As can be seen from Figure 2 the coils are positioned one slightly above the other although they could be formed into a flat configuration.

The strip should be made of material having a relatively high coefficient of expansion, preferably at least that of copper.

As an example, the strip may be made of copper with an electro-tin finish or of stainless steel.

The element 1 may be mounted with the major axis of the coils either vertically or horizontally in the heater and as can be seen the coils of the element are free to expand and contract in all directions.

In use, a sensor would normally be provided closely adjacent the outermost coil so that electric current to the circuit is broken unless the coil is fully covered by water or other liquid to be heated.

As an example the outer coil may have a radius of 57 mm and the inner a radius of about 27½ mm.

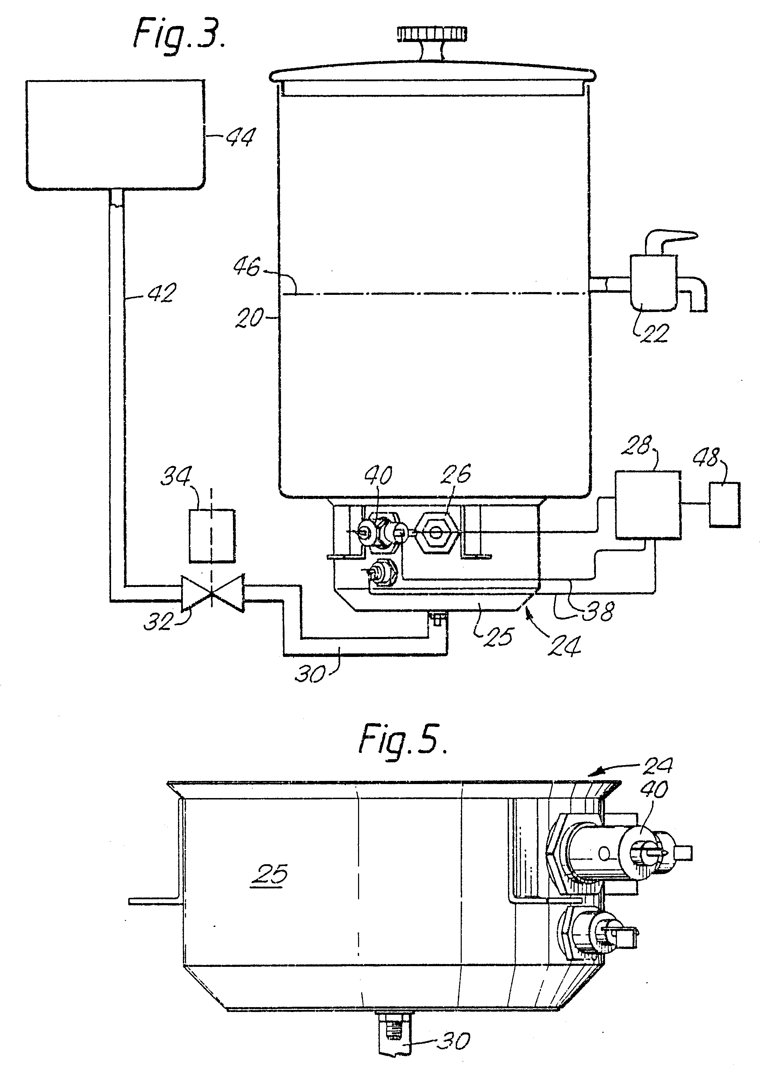

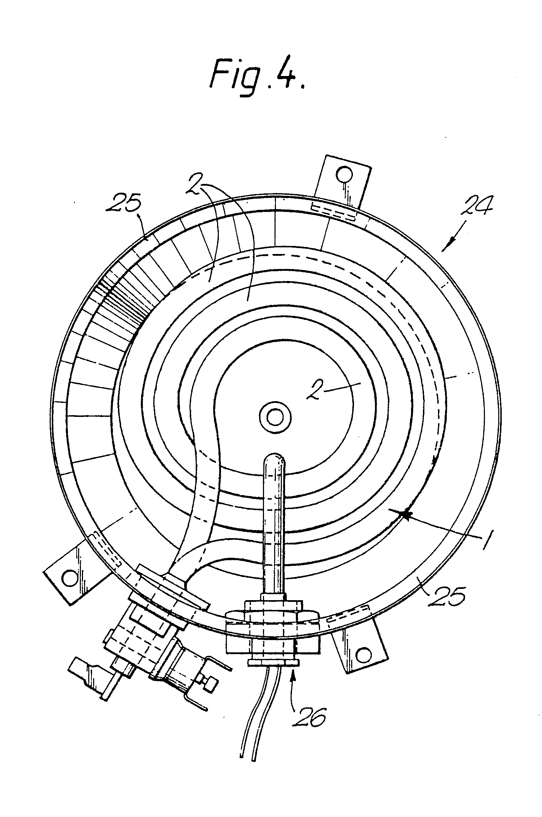

An application of the heating element 1 is shown in Figures 3 to 5 which illustrates a hot water dispenser 18 having a tank 20 forming a hot water container of typically about 5.7 litres capacity with a draw-off tap 22 located about half way up so that an approximate equal volume of the tank is above and below the tap. A heater 24 having a housing 25 incorporating the heating element 1 horizontally (see Figure 4), forms the base of the tank, and just above the element 1 a thermostat phial 26 is mounted in the tank wall and is connected to a controller 28. A conduit 30 extends through the base of the heater 24 to a shut-off valve 32 operated by solenoid 34. The heating element 1 is connected by lines 38 to controller 28 via a thermal safety cut-out 40.

A further conduit 42 connects valve 32 to a cold water container 44 having a typical capacity of 2.8 litres. Conduits 42 and 30 form a connecting means between the cold water container 44 and the hot water container defined by tank 20.

In order to operate the dispenser 18, water is filled manually to a minimum level 46, and main switch 48 is switched on such that the heating element 1 heats up the water in the tank 20.

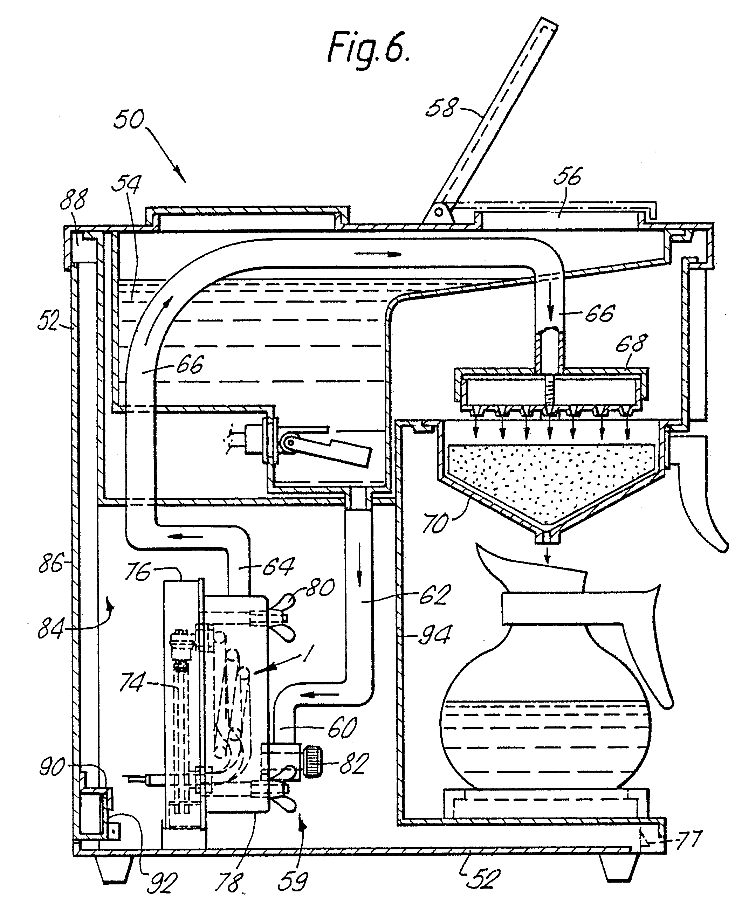

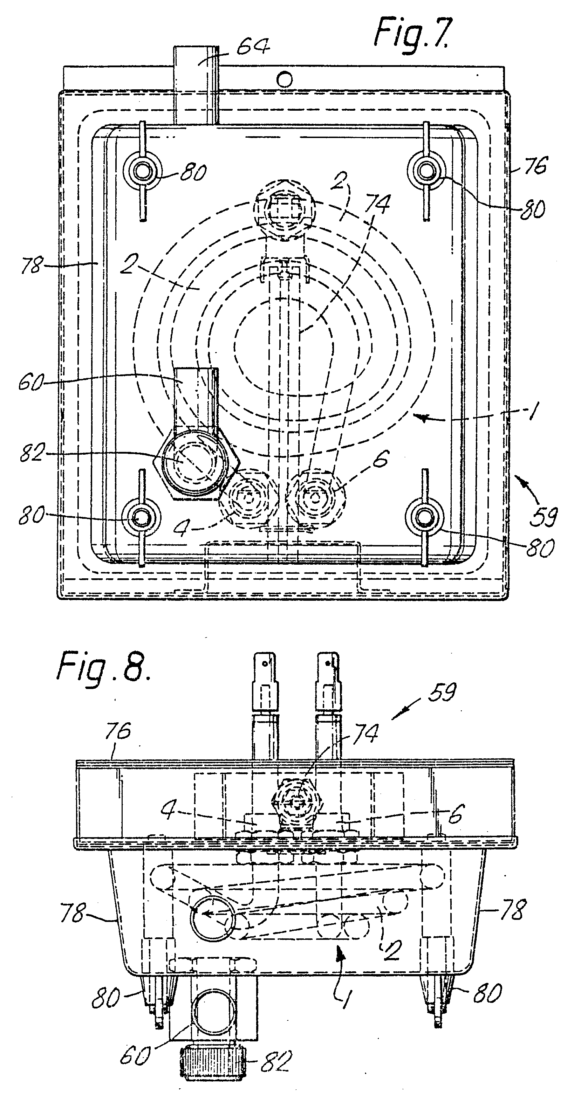

A further application of the heating element 1, is shown in Figures 6 to 8 which illustrates a coffee making apparatus 50 comprising a casing or body 52 having an internal cold water tank or reservoir 54 positioned at its top and having an inlet 56 through the top of the casing 52 to receive cold water from a flask, which inlet may be closed by cover 58.

The cold water tank 54 is connected to an inlet 60 of a heater 59 by means of a flexible pipe or conduit 62. The heater 59 comprises a rear housing portion 76 and a front housing portion 78, the front housing portion 78 being secured to the rear housing portion 76 by four wing nuts 80. The inlet 60 has an adjustable water flow controller 82 in order to control the rate of flow of cold water into the heater 59. After water is heated in the heater 59, the heated water flows from the heater through an outlet 64 to a flexible pipe or conduit 66 which passes up adjacent the cold water tank 54 and connects with a spray head 68 positioned above the coffee infused basket 70. Switches 77 for the apparatus are mounted at the front of the apparatus.

A thermal cut-out is provided for the apparatus 50, whereby in the event there is no water in the heater 59, the thermal cut-out would trip thus saving the element 1 from destruction. The thermal cut-out after tripping is mechanically reset using a mechanical reset arm 74.

Access to one face of the heater 59 is by means of an access opening 84 at the rear of the apparatus casing 52 and the access opening is covered by a cover plate 86 which is retained in the casing at its top by means of a lip portion 88 and at the bottom by means of a bracket 90 which engages over a retaining member 92. Removal of the cover 86 is by lifting the cover so that bracket 90 disengages with member 92 and by lifting the bottom of the cover 86 away from casing 52 and allowing top of the cover to drop out of retention by lip 88.

Access to the other face of the heater 59 is by means of an access opening (not shown) in the panel 94 positioned behind the coffee jug.

## Claims

1. An apparatus for heating and dispensing liquid, the apparatus having an electric heating element formed as a spiral with at least two coils for heating liquid to boiling point, the heating element being supported by and positioned in the apparatus whereby the area underneath the coils is substantially free of obstruction so that scale can crack off the coils and fall freely such a distance as to prevent build-up of scale around the lowermost portions of the coils, and means for dispensing the heated liquid from the apparatus.

2. An apparatus as claimed in claim 1 wherein the coils are positioned adjacent each other.

3. An apparatus as claimed in either claim 1 or 2 wherein the linear expansion coefficient of the coils is between 17 and $21 \times 10^{-6}\mathrm{K}^{-1}$.

4. An apparatus as claimed in any preceding claim wherein the coils are made of either copper with an electro-tin finish or stainless steel.

5. An apparatus as claimed in any preceding claim wherein the cross-sectional area of the coils is between 40 and 60 mm$^2$.

6. An apparatus as claimed in any preceding claim wherein the coils are mounted with their major axis either substantially vertical or substantially horizontal.

7. An apparatus as claimed in any preceding claim wherein a water sensor is provided adjacent the uppermost portion of the coils to prevent overheating of the heating element.

8. An apparatus as claimed in any preceding claim wherein the lowermost portions of the coils are positioned a distance from any obstruction corresponding to at least the radius of the coils.

9. An apparatus as claimed in any preceding claim in the form of a hot water dispenser comprising a hot water container, a heater incorporating the electric heating element to heat water in the container, and a tap to dispense hot water from the container.

10. An apparatus as claimed in any one of claims 1 to 8 in the form of a coffee or tea making or brewing apparatus comprising a water reservoir, a heater incorporating the electric heating element to heat water from the reservoir, and a spray head through which hot water from the heater is impinged onto a bed of ground coffee (or tea) to produce coffee (or tea) liquor.

Fig.1.

Fig.2.

*Fig.3.*

*Fig.5.*

# Fig.4.

# Fig.6.

0 262 273

Fig.7.

64

80

76

80

2

74

78

2

60

1

82

6

4

80

80

59

Fig.8.

59

76

74

4

6

78

78

2

80

80

1

60

82

| Category | Citation of document with indication, where appropriate, of relevant passages | Relevant to claim | CLASSIFICATION OF THE APPLICATION (Int. Cl.4) |
|---|---|---|---|
| | **DOCUMENTS CONSIDERED TO BE RELEVANT** | | EP 86310042.6 |
| Y | US - A - 3 730 144 (ARZBERGER) | 1,2,6, 8,9 | H 05 B 3/82 |
| A | * Column 2, line 46 - column 4, line 11; fig. * | 7,10 | F 24 H 1/20 |
| | -- | | A 47 J 31/54 |
| Y | DD - A - 214 744 (VEB KONTAKTBAU-ELEMENTE) | 1,2,6, 8,9 | |
| A | * Abstract; fig. 1,2 * | 7,10 | |
| | -- | | |
| Y | EP - A2 - 0 139 394 (JACKSON) | 1,2,6, 8,9 | |
| A | * Abstract * | 10 | |
| | -- | | |
| Y | GB - A - 964 904 (POWER FREQUENCY HEATING LIMITED) | 1,2,6, 8,9 | |
| A | * Page 2, lines 9-34; fig. 1,2 * | 10 | **TECHNICAL FIELDS SEARCHED (Int. Cl.4)** |
| | -- | | |
| A | DE - A - 1 454 674 (ECKERFELD) | 1,9 | A 47 J 31/00 |
| | * Page 2, lines 8-16; claim 1; fig. 1,2 * | | F 24 H 1/00 |
| | -- | | H 05 B 3/00 |
| A | AT - B - 238 332 (GUNDA METALL-WARENFABRIK) * Page 2, lines 37-47; claim 1; fig. 2 * | 1,9 | |
| | -- | | |
| A | DE - A - 1 454 665 (G.BAUKNECHT GMBH) | 1,9 | |
| | * Page 3, line 15 - page 4, line 23; fig. 1,2 * | | |
| | -- | | |

The present search report has been drawn up for all claims

| Place of search | Date of completion of the search | Examiner |
|---|---|---|
| VIENNA | 10-12-1987 | TSILIDIS |

Application number

-2-
EP 86310042.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DD - A - 60 597 (K. REINHARDT)<br>* Claim 1; fig. 1 *<br>-- | 1,2 | |
| A | GB - A - 2 112 274 (W.M.STILL AND SONS LTD.)<br>* Abstract; fig. 1 *<br>---- | 1,9,10 | |

TECHNICAL FIELDS
SEARCHED (Int. Cl.4)

The present search report has been drawn up for all claims

| Place of search | Date of completion of the search | Examiner |
|---|---|---|
| VIENNA | 10-12-1987 | TSILIDIS |